# EUROPÄISCHE PATENTSCHRIFT

(11) **EP 0 966 380 B1**
(45) Veröffentlichungstag und Bekanntmachung des Hinweises auf die Patenterteilung: **19.06.2002**
(21) Anmeldenummer: 98913684.1
(22) Anmeldetag: 06.03.1998
(51) Int. Cl.: B60T 8/36, B60T 8/50, B60T 13/68

(54) **DRUCKREGELVENTIL**
PRESSURE CONTROL VALVE
SOUPAPE DE REGLAGE DE PRESSION

(30) Priorität: 12.03.1997 DE 19710173
(43) Veröffentlichungstag der Anmeldung: 29.12.1999
(73) Patentinhaber: Continental Teves AG & Co. oHG, 60488 Frankfurt am Main (DE)
(72) Erfinder: FEIGEL, Hans-Jörg, D-61191 Rosbach (DE)
(86) Internationale Anmeldenummer: EP9801337
(87) Internationale Veröffentlichungsnummer: WO9840259

(56) Entgegenhaltungen:
- EP-A- 0 363 845
- EP-A- 0 369 412
- DE-A- 3 935 395
- DE-A- 4 141 354
- DE-A- 4 441 150

## Beschreibung

Die Erfindung betrifft ein elektromagnetisch ansteuerbares Mehrwege-Regelventil für schlupfgeregelte hydraulische Kraftfahrzeugbremssysteme, nach dem Oberbegriff des Patentanspruchs 1.

Ein Mehrwegeventil ist beispielsweise aus der DE 44 41 150 A1 bekannt. Der Schieber dieses Mehrwegeventils wird über einen axial beweglich angeordneten und elektromagnetisch verstellbaren Stössel in axialer Richtung verschoben. Wenn die ABS-Steuerung beispielsweise ein blockierendes Rad feststellt, so wird eine elektromagnetische Stelleinrichtung aktiviert, das heißt es fließt Strom durch eine Spule, so dass ein mit dem Stössel verbundener Anker derart verlagert wird, dass der Schieber die Hochdruckquelle strömungsmäßig von der Radbremse trennt und hieran anschließend der Stössel ein zwischen der Radbremse und dem Niederdruckspeicher vorgesehenes Sitzventil öffnet.

Das vorbekannte Mehrwegeventil funktioniert zwar zufriedenstellend, es ist jedoch für eine bestimmte Fahrzeugklasse mit einem bestimmten Bremsdruckbereich vorgesehen. Bei Sitzventilen ist die zur Betätigung des Sitzventils erforderliche Größe bzw. Stärke des elektromagnetischen Antriebs durch den Ventilöffnungsquerschnitt bestimmt, was wiederrum durch den Bremsdruckbereich für verschiedene Fahrzeuge vorgegeben ist. Dies führt dazu, dass eine Vielfalt unterschiedlich dimensionierter Sitzventile hergestellt und bereitgehalten werden müssen.

Aus der gattungsbildenden EP-A-0 369 412 ist bereits ein elektromagnetisch ansteuerbares Mehrwege-Regelventil für schlupfgeregelte hydraulische Kraftfahrzeugbremssysteme bekannt geworden, das über einen Schieber in einem Gehäusekörper verfügt, dessen erste, als variable Blende wirksame Steuerkante normalerweise eine Druckmittelverbindung zwischen einem Anschluß der Hochdruckquelle und dem entfernt zum Schieber im Gehäusekörper einmündenden Anschluß einer Radbremse aufweist, wozu im Schieber eine mit einer Festblende versehene Zentralbohrung angeordnet ist. Der Schieber ist als Stromregelventil ausgebidet, so daß sich unabhängig von der elektromagnetischen Erregung einer Ventilspule durch die hydraulische Regelstellung des Schiebers ein konstanter Druckmittelstrom zwischen der Hochdruckquelle und der Radbremse einstellen läßt. Bei elektromagnetischer Erregung der Ventilspule wird der Schieber in eine Stellung gezwungen, in der die erste Steuerkante den Anschluß der Hochdruckquelle vom Anschluß der Radbremse trennt, während eine zweite Steuerkante am Schieber über die Zentralbohrung im Schieber eine gedrosselte Verbindung zwischen dem Anschluß der Radbremse und einem Anschluß eines Niederdruckspeichers freigibt.

Der vorliegenden Erfindung liegt die Aufgabe zugrunde, ein Mehrwege-Regelventil der eingangs beschriebenen Art zu schaffen, welches sehr klein baut und für mehrere Fahrzeugklassen, das heißt bei verschiedenen Bremsdruckverhältnissen einsetzbar ist.

Diese Aufgabe wird bei einem Mehrwegeventil der eingangs beschriebenen Art erfindungsgemäß durch die den Patentanspruch 1 kennzeichnenden Merkmale gelöst.

Hierdurch wird erfindungsgemäß ein Druckausgleich auf beiden Seiten des Ventilkörpers erreicht, so dass der elektromagnetische Antrieb entsprechend geringer dimensioniert werden kann. Mit der Erfindung wird auch die Möglichkeit geschaffen, für verschiedene Fahrzeugklassen ein und dasselbe Mehrwegeventil einzusetzen.

In vorteilhafter Weise handelt es sich bei dem Ventil zwischen Radbremse und Niederdruckspeicher um ein Sitzventil, so dass der Schieber gegen einen Dichtsitz drückbar ist, um eine druckdichte Trennung von Radbremse und Niederdruckspeicher einerseits sowie einen großen und schnell erreichbaren Ventilöffnungsquerschnitt andererseits zu erreichen.

Nach einer besonders vorteilhaften Ausführungsform der Erfindung weist der Schieber eine zweite Steuerkante auf, die mit einer korrespondierenden zweiten Steuerkante an dem Gehäusekörper einen zweiten veränderbaren Drosselquerschnitt in der hydraulischen Verbindung zwischen der Radbremse und dem Niederdruckspeicher bildet. Hierdurch besteht die Möglichkeit, den an der Radbremse anliegenden Druck während einer Druckhaltephase zu halten und zu regeln.

Die ersten und zweiten Steuerkanten von Schieber und Gehäusekörper sind vorzugsweise derart angeordnet, dass beim Verschieben des Schiebers in Richtung eines Druckabbaus an der Radbremse zuerst der erste Strömungsquerschnitt geschlossen und dann erst der zweite Strömungsquerschnitt geöffnet wird. Auf diese Weise kann eine Druckregelphase durchlaufen werden, in der der Druck an der Radbremse durch verhältnismäßig geringfügiges Verschieben des Schiebers erhöht oder verringert werden kann.

In ganz besonders vorteilhafter Weise nehmen die von den Steuerkanten begrenzten Strömungsquerschnitte bei gleichmäßiger Schieberbewegung progressiv zu. Damit wird ein sehr rasches Ansprechen auf eine Lageveränderung des Schiebers während einer Druckregelphase erreicht.

Es wird desweiteren vorgeschlagen, die zweite Steuerkante des Schiebers an der dem Dichtsitz zugewandten Stirnseite des Schiebers auszubilden, so dass der Schieber mit dieser zweiten Steuerkante gegen den Dichtsitz drückbar ist. Auf diese Weise wird während des Normalbremsbetriebs eine sichere Abdichtung zum Niederdruckspeicher gewährleistet und die zweite Steuerkante kann nach dem Abheben von dem Dichtsitz den Strömungsquerschnitt entweder sogleich freigeben oder durch Zusammenwirken mit der zweiten Steuerkante des Gehäusekörpers eine Spaltdichtung bilden. Durch Passieren dieser zweiten Steuerkante kann der zweite Drosselquerschnitt geöffnet werden.

Durch die vorstehend genannten Maßnahmen ist es möglich, mit dem erfindungsgemäßen Mehrwegeventil einen Strömungsquerschnitt variabel einzustellen, so dass auf der einen Seite ein schnelles Anbremsen und auf der anderen Seite eine feine Volumendosierung während des ABS-Regelbetriebs möglich ist. Dies erfolgt nicht, wie oftmals bei bekannten ABS-Mehrwegeventilen, durch eine unterschiedlich lange Maximalöffnung des Ventils (Pulsweitenmodulation) sondern durch eine Kombination aus Pulsweiten- und Pulsamplitudenmodulation (unterschiedlich große Ventilöffnungen). Dies könnte ansich durch einen Kraftabgleich, das heißt durch geeignete Dimensionierung der elektromagnetischen Stelleinrichtung mit der auf den Ventilkörper eines Sitzventils einwirkenden Federgegenkraft erfolgen. Um jedoch ein Ventil zur Verfügung zu haben, welches für mehrere Fahrzeugklassen einsetzbar ist, wird dies in vorteilhafter Weise durch die erfindungsgemäße Ausbildung des Mehrwegeventils erreicht, wobei zusätzlich ein Positionsregelkreis für den Ventilschieber vorgesehen wird. Die Schiebestellung des Sensors ist dann in vorteilhafter Weise über eine elektronische Sensoreinrichtung feststellbar und über eine elektronische Regeleinrichtung regelbar. Damit können störende Reibungskräfte ausgeregelt werden, und der Schaltzustand des Mehrwegeventils, das heißt die Position des Schiebers ist zu jedem Zeitpunkt bekannt. Dies eröffnet wiederum die Möglichkeit, die Geschwindigkeit der Änderung des Öffnungsquerschnitts gezielt vorzugeben. Da festgestellt wurde, dass die Änderung des Druckgradienten eine Hauptgeräuschquelle bei derartigen Mehrwegeventilen darstellt, ist es daher möglich, die Geschwindigkeit dieser Änderung auf ein solches Maß zu reduzieren, dass die Ansprechzeiten noch zufriedenstellend und das beim Betrieb entstehende Geräusch noch nicht störend ist. Unterstützend wirkt hier der vorstehend bereits erwähnte progressive Verlauf des Öffnungsquerschnitts, der dadurch erreicht wird, dass eine kreisförmige Zulaufbohrung die Öffnungsfläche beschreibt. Durch diese Art der Regelung bzw. Steuerung entfällt auch das bei der Pulsweitenmodulation entstehende Anschlaggeräusch des Ankers. Wird nach Abschalten der ABS-Regelung der Schieber in Richtung auf seine erste Endlage hin bewegt, so wirkt ein vorzugsweise elastomerer Dichtsitz stark dämpfend, wenn der Schieber daran angelegt wird.

Weitere Merkmale, Vorteile und Einzelheiten der Erfindung ergeben sich aus den beigefügten Schutzansprüchen sowie der zeichnerischen Darstellung und nachfolgenden Beschreibung einer bevorzugten Ausführungsform des erfindungsgemäßen Mehrwegeventils. In der Zeichnung zeigt:
Figur 1 eine Schnittansicht des erfindungsgemäßen Mehrwegeventils im Normalbremsbetrieb;
Figur 2 eine Schnittansicht des erfindungsgemäßen Mehrwegeventils nach Figur 1 im maximalen Druckabbaubetrieb und
Figur 3 eine Schnittdarstellung des erfindungsgemäßen Mehrwegeventils nach Figur 1 im Druckhaltebetrieb.

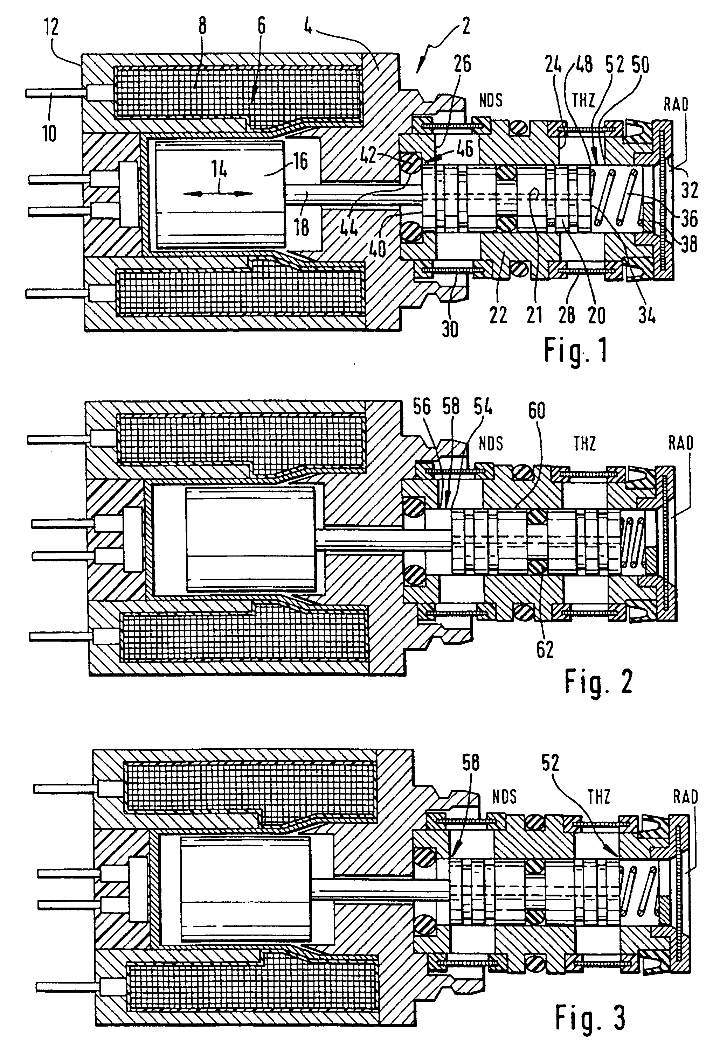

Die Figuren 1 bis 3 zeigen ein elektromagnetisch ansteuerbares Mehrwegeventil 2 für schlupfgeregelte hydraulische Kraftfahrzeugbremssysteme in drei verschiedenen Betriebszuständen. Mit dem Bezugszeichen 4 ist ein eine elektromagnetische Stelleinrichtung 6 aufnehmender Gehäuseblock bezeichnet. Die elektromagnetische Stelleinrichtung 6 umfasst eine Spule 8, deren Anschlüsse 10 auf einer Stirnseite 12 des Gehäuseblocks 4 nach außen treten sowie einen in einer Längsrichtung 14 des Ventils 2 verschiebbaren Anker 16. Von dem Anker 16 erstreckt sich in die der Stirnseite 12 des Gehäuseblocks 4 entgegengesetzte Richtung eine Stösselstange 18, die mit einem Schieber 20 fest verbunden ist, der eine in Längsrichtung 14 verlaufende durchgehende Öffnung 21 aufweist.

An der in Längsrichtung 14 der Stirnseite 12 gegenüberliegenden Seite des Gehäuseblocks 2 ist ein hülsenförmiger Gehäusekörper 22 druckdicht angefügt, der den Schieber 20 in Längsrichtung 14 verschieblich aufnimmt. Der hülsenförmige Gehäusekörper 22 weist je zwei in Längsrichtung 14 voneinander beabstandete radial erstreckte Öffnungen 24, 26 auf, in denen jeweils ein Filter 28 bzw. 30 angeordnet ist. Die radiale Öffnung 24 bildet einen Anschluß für eine in den Figuren nicht dargestellte Hochdruckquelle, beispielsweise ein Tandemhauptzylinder des Bremssystems. Die Öffnung 26 bildet einen Anschluß für einen gleichfalls nicht dargestellten Niederdruckspeicher auf der vom Gehäuseblock 4 abgewandten Seite des hülsenförmigen Gehäusekörpers 22 mündet die Längsöffnung (21) zu einem Anschluß 32, an dem eine nicht dargestellte Verbindungsleitung zum Radbremszylinder anschließbar ist.

Der hülsenförmige Gehäusekörper 22 ist dichtend in einem weiteren nicht dargestellten Gehäuseblock aufgenommen.

Auf der vom Stössel 18 abgewandten und dem Anschluß 32 für die Radbremse zugewandten Stirnseite 34 ist eine Feder 36 vorgesehen, welche sich einenends gegen eine radial nach innen ragende Stufe 38 und anderenends gegen die Stirnseite 34 des Schiebers 20 abstützt und diesen in Längsrichtung 14 auf die elektromagnetische Stelleinrichtung 6 hin vorspannt.

Der Schieber 20 bildet mit seiner der elektromagnetischen Stelleinrichtung 6 zugewandten Stirnseite 40 und mit einem elastomeren Ringelement 42, welches gegen den Gehäuseblock 4 einen Dichtsitz 44 bildend anliegt, ein Sitzventil 46.

Die radial äußere Begrenzung der von dem Sitzventil 46 abgewandten Stirnseite 34 des Schiebers 20 bildet eine erste Steuerkante 48, welche zusammen mit einer korrespondierenden Steuerkante 50 des hülsenförmigen Gehäusekörpers 22 einen ersten veränderbaren Drosselquerschnitt 52 zwischen dem Anschluß 32 zur Radbremse und der radialen Öffnung 24 zur Hochdruckquelle bildet.

Der Schieber 20 ist als Hohlschieber ausgebildet, so dass über seine Öffnung 21 eine Druck- und Strömungskommunikation zwischen dem an die radbremsenseitige Stirnseite 34 des Schiebers 20 angrenzenden Abschnitt und dem an die ankerseitige Stirnseite 40 des Schiebers 20 angrenzenden Abschnitt hergestellt wird. Die Stirnseite 40 des Schiebers 20 bildet radial außen eine zweite Steuerkante 54, wie am besten aus der Figur 2 zu ersehen ist, welche mit einer korrespondierenden Steuerkante 56 des Gehäusekörpers 22 einen zweiten veränderbaren Drosselquerschnitt 58 zwischen Niederdruckspeicher und Radbremse bildet, der durch Verschieben des Schiebers 20 veränderbar ist und geöffnet bzw. geschlossen werden kann.

In Figur 1 ist das Mehrwegeventil im Normalbremsbetrieb dargestellt. Der Schieber 20 befindet sich im unbestromten Zustand der elektromagnetischen Stelleinrichtung 6 unter der Vorspannung der Feder 36 in seiner ersten Endlage, in welcher der Drosselquerschnitt 52 zwischen Radbremse und Hochdruckquelle maximal geöffnet ist. Die Steuerkante 54 zum Niederdruckspeicher hin hat die Steuerkante 56 überfahren, so dass der Niederdruckspeicher strömungsmäßig von der Radbremse getrennt ist. Um eine sichere Abdichtung bzw. Trennung zu bewerkstelligen ist auch das Sitzventil 46 geschlossen, das heißt die Steuerkante 54 des Schieber 20 wird durch die Feder 36 dichtend gegen das elastomere Ringelement 42 gedrückt.

Wird von der Bremsensteuer- und Regeleinrichtung an dem zugeordneten Rad ein Schlupf gegenüber der Fahrbahn festgestellt, so wird der Druck im Radbremszylinder abgebaut. Figur 2 zeigt hierfür die Schieberstellung für maximalen Druckabbau. Hierfür wird die elektromagnetische Stelleinrichtung 6 bestromt und der Anker entgegen der Wirkung der Feder 36 in Längsrichtung 14 in seine zweite Endlage nach rechts bewegt. Hierbei wird der Schieber 20 in gleicher Richtung bewegt und das Sitzventil 46 geöffnet, in dem die Steuerkante 54 des Schiebers 20 von dem elastomeren Ringelement 42 abgehoben wird und die Steuerkante 54 die Steuerkante 56 überstreicht, so dass ein progressiv zunehmender Drosselquerschnitt 58 zwischen dem Niederdruckspeicher und der Radbremsenseite geöffnet wird. Somit kann zum Druckabbau in dem Radbremszylinder hydraulische Flüssigkeit durch den Schieber 20 hindurch und am Dichtsitz 44 vorbei zum Niederdruckspeicher entweichen. Bevor jedoch der Drosselquerschnitt 58 geöffnet wird, überfährt die radseitige Steuerkante 48 des Schiebers 2 die korrespondierende Steuerkante 50, so dass die Hochdruckquelle abgetrennt wird. Erst hiernach öffnet sich der Drosselquerschnitt 58 zum Niederdruckspeicher.

Figur 3 zeigt das Mehrwegeventil 2 in einer Druckhaltestellung. Diese wird in besonders vorteilhafter Weise durch eine Kombination aus Pulsweiten- und Pulsamplitudenmodulation der Steuersignale für die elektromagnetische Stelleinrichtung 6 erreicht, indem der Anker 16 und damit Stössel 18 und Schieber 20 gegenüber der Stellung nach Figur 2 soweit in Richtung auf die Normalbremsstellung (Figur 1) zurückbewegt werden, dass die niederdruckspeicherseitige Steuerkante 54 des Schiebers 20 die korrespondierende Steuerkante 56 gerade erreicht bzw. geringfügigst überlappt. In dieser in der Figur 3 dargestellten Schieberstellung befindet sich auch die radseitige Steuerkante 48 des Schiebers 20 im Bereich ihrer korrespondierenden Steuerkante 50. Durch geringfügigstes Bewegen des Schiebers 20 in die eine oder andere Richtung durch entsprechende Ansteuerung der elektromagnetischen Stelleinrichtung 6 kann der Druck in der Radbremse weiter abgebaut oder wieder erhöht werden. Es steht somit eine feine Volumendosierung bei der ABS-Regelung zur Verfügung, ohne dass durch eine Pulsweitenmodulation durch unterschiedlich langes Maximalöffnen des Ventils störende Anschlaggeräusche des Ankers hingenommen werden müssten.

Zwischen der durch Umfangsnuten unterbrochenen Umfangsfläche 60 des Schiebers 20 und dem Gehäusekörper 22 ist eine Spaltdichtung gegeben, die durch das radiale Spiel zwischen Schieber 20 und Gehäusekörper 22 gebildet und bestimmt wird. Dieser Spalt wird jedoch bei Anlegen der Steuerkante 54 des Schiebers 20 gegen das elastomere Ringelement 42, das heißt durch Schließen des Sitzventils 46 vollständig abgedichtet. Zusätzlich ist bei dem dargestellten Mehrwegeventil 2 eine Berührungsdichtung 62 in Form eines weiteren elastomeren Ringelements in axialer Richtung zwischen den radialen Öffnungen 24 und 26 zur Hochdruckquelle bzw. zum Niederdruckspeicher vorgesehen, welche den Spalt zwischen Schieber 20 und hülsenförmigem Gehäusekörper 22 abdichten.

## Patentansprüche

1. Elektromagnetisch ansteuerbares Mehrwege-Regelventil (2) für schlupfgeregelte hydraulische Kraftfahrzeugbremssysteme, zum strömungsmäßigen Verbinden wenigstens einer Radbremse mit einer Hochdruckquelle oder mit einem Niederdruckspeicher über mehrere Anschlüsse am Mehrwege-Regelventil, umfassend
- einen in einem hülsenförmigen Gehäusekörper (22) geführten Schieber (20), der eine erste Steuerkante (48) aufweist und zusammen mit einer korrespondierenden Steuerkante (50) an dem Gehäusekörper (22) einen ersten veränderbaren Drosselquerschnitt (52) in der hydraulischen Druckmittelverbindung zwischen dem Anschluß der Hochdruckquelle und dem Anschluß der Radbremse bildet, wobei der Schieber (20) in Richtung auf eine erste Endlage hin vorgespannt ist, in welcher der Anschluß der Radbremse mit dem Anschluß der Hochdruckquelle strömungsmäßig verbunden und vom Anschluß des Niederdruckspeichers strömungsmäßig getrennt ist,
- ein zwischen dem Anschluß der Radbremse und dem Anschluß des Niederdruckspeichers vorgesehenes Ventil (46), welches im Normalbremsbetrieb geschlossen ist und zum Druckabbauen in der Radbremse geöffnet wird,
**dadurch gekennzeichnet, dass**
ein das Ventil (46) zwischen dem Anschluß der Radbremse und dem Anschluß des Niederdruckspeichers schließender Ventilkörper von dem Schieber (20) gebildet ist, daß im Sperrzustand dieses als Sitzventil ausgebildeten Ventils (46) beide Stirnseiten (40, 34) des Schiebers (20) mit unter dem am Anschluß der Radbremse anstehenden Druck stehendem hydraulischem Medium beaufschlagt sind und der Schieber (20) gegen einen Dichtsitz (44) gedrückt ist, und daß das hydraulische Medium beim Öffnen des Sitzventils (46) zum Anschluß des Niederdruckspeichers entweichen kann.

2. Mehrwege-Regelventil nach Anspruch 1, **dadurch gekennzeichnet,dass** der Schieber (20) eine zweite Steuerkante (54) aufweist, die mit einer korrespondierenden zweiten Steuerkante (56) an dem Gehäusekörper (22) einen zweiten veränderbaren Drosselquerschnitt (58) in der hydraulischen Verbindung zwischen den Anschlüssen von Radbremse und Niederdruckspeicher bildet.

3. Mehrwege-Regelventil nach Anspruch 1 oder 2, **dadurch gekennzeichnet,dass** die ersten (48, 50) und zweiten Steuerkanten (54, 56) derart angeordnet sind, dass beim Verschieben des Schiebers (20) in Richtung eines Druckabbaus am Anschluß der Radbremse zuerst der erste Strömungsquerschnitt (52) geschlossen und dann erst der zweite Strömungsquerschnitt (58) geöffnet wird.

4. Mehrwege-Regelventil nach Anspruch 2 oder 3, **dadurch gekennzeichnet, dass** die von den Steuerkanten (48, 50; 54, 56) begrenzten Strömungsquerschnitte (52, 58) bei gleichmäßiger Schieberbewegung progressiv zunehmen.

5. Mehrwege-Regelventil nach Anspruch 2, 3 oder 4, **dadurch gekennzeichnet, dass** die zweite Steuerkante (54) des Schiebers (20) an der dem Dichtsitz (44) zugewandten Stirnseite (40) des Schiebers (20) ausgebildet ist.

6. Mehrwege-Regelventil nach Anspruch 5, **dadurch gekennzeichnet, dass** der Schieber (20) mit seiner zweiten Steuerkante (54) gegen den Dichtsitz (44) drückbar ist.

7. Mehrwege-Regelventil nach Anspruch 6, **dadurch gekennzeichnet, dass** die zweite Steuerkante (54) nach Abheben von dem Dichtsitz (44) immer noch mit der zweiten Steuerkante (56) des Gehäusekorpers (22) überlappt und erst bei Passieren dieser zweiten Steuerkante (56) den zweiten Drosselquerschnitt (58) öffnet.

8. Mehrwege-Regelventil nach wenigstens einem der vorstehenden Ansprüche, **dadurch gekennzeichnet, dass** der Dichtsitz (44) ein elastomeres Ringelement (42) umfasst, gegen das der Schieber (20) mit seiner zweiten Steuerkante (54) dichtend anlegbar ist.

9. Mehrwege-Regelventil nach wenigstens einem der vorstehenden Ansprüche, **dadurch gekennzeichnet, dass** die Schiebestellung des Schiebers (20) über eine elektronische Sensoreinrichtung feststellbar und über eine elektronische Regeleinrichtung regelbar ist.

10. Mehrwege-Regelventil nach wenigstens einem der vorstehenden Ansprüche, **dadurch gekennzeichnet, dass** der Positionssensor mit einem Spulenkörper der elektromagnetischen Stelleinrichtung (6) form- oder reibschlüssig verbunden und wie diese mit der ECU verbunden ist.

11. Mehrwege-Regelventil nach wenigstens einem der vorstehenden Ansprüche, **dadurch gekennzeichnet, dass** die elektromagnetische Stelleinrichtung (6) einen Proportionalmagneten umfasst.

12. Mehrwege-Regelventil nach wenigstens einem der vorstehenden Ansprüche, **dadurch gekennzeichnet, dass** zwischen dem Schieber (20) und dem Gehäusekörper (22) eine Spaltdichtung ausgebildet ist.

13. Mehrwege-Regelventil nach Anspruch 12, **dadurch gekennzeichnet, dass** der Spalt durch das radiale Spiel zwischen Schieber (20) und Gehäusekörper (22) gebildet ist.

14. Mehrwege-Regelventil nach Anspruch 12 oder 13, **dadurch gekennzeichnet, dass** zusätzlich eine Berührungsdichtung (62) vorgesehen ist.

15. Mehrwege-Regelventil nach Anspruch 14, **dadurch gekennzeichnet, dass** die Berührungsdichtung (62) als vorgespannte Elastomer/Tefoldichtung ausgebildet ist.

## Claims

1. Electromagnetically actuatable multi-way control valve (2) for slip-controlled hydraulic automotive vehicle brake systems, for providing a flow connection between at least one wheel brake and a high-pressure source or a low-pressure accumulator by way of several ports at the multi-way control valve, comprising
- a slide (20) guided in a sleeve-shaped housing member (22), the slide having a first control edge (48) and providing, along with a corresponding control edge (50) on the housing member (22), a first variable throttle cross-section (52) in the hydraulic pressure fluid connection between the port of the high-pressure source and the port of the wheel brake, and the slide (20) is biassed in the direction of a first end position in which the port of the wheel brake is connected to the port of the high-pressure source in terms of flow and isolated from the port of the low-pressure accumulator in terms of flow,
- a valve (46) provided between the port of the wheel brake and the port of the low-pressure accumulator which is closed in the normal braking operation and opened for pressure reduction in the wheel brake,
**characterized in that** a valve member which closes the valve (46) between the port of the wheel brake and the port of the low-pressure accumulator is provided by the slide (20), **in that** in the closed condition of valve (46) configured as a seat valve, both front surfaces (40, 34) of the slide (20) are acted upon by hydraulic medium to which the pressure prevailing at the port of the wheel brake is applied and the slide (20) is pressed against a sealing seat (44), and **in that** the hydraulic medium may escape to the port of the low-pressure accumulator when the seat valve (46) is opened.

2. Multi-way control valve as claimed in claim 1,
**characterized in that** the slide (20) has a second control edge (54) which provides, along with a corresponding second control edge (56) on the housing member (22), a second variable throttle cross-section (58) in the hydraulic connection between the ports of the wheel brake and the low-pressure accumulator.

3. Multi-way control valve as claimed in claim 1 or 2,
**characterized in that** the first (48, 50) and the second control edges (54, 56) are so arranged that upon displacement of the slide (20) in the direction of reducing the pressure at the port of the wheel brake, initially, the first flow cross-section (52) is closed before the second flow cross-section (58) is opened.

4. Multi-way control valve as claimed in claim 2 or 3,
**characterized in that** the flow cross-sections (52, 58) limited by the control edges (48, 50; 54, 56) increase progressively when the slide movement is steady.

5. Multi-way control valve as claimed in claim 2, 3, or 4,
**characterized in that** the second control edge (54) of the slide (20) is configured on the front surface (40) of the slide (20) facing the sealing seat (44).

6. Multi-way control valve as claimed in claim 5,
**characterized in that** the slide (20) can be urged with its second control edge (54) against the sealing seat (44).

7. Multi-way control valve as claimed in claim 6,
**characterized in that** the second control edge (54) after its lifting from the sealing seat (44) still overlaps with the second control edge (56) of the housing member (22) and will open the second throttle cross-section (58) only after having passed this second control edge (56).

8. Multi-way control valve as claimed in at least one of the preceding claims,
**characterized in that** the sealing seat (44) comprises an elastomeric annular element (42) on which the slide (20) with its second control edge (54) is movable into sealing abutment.

9. Multi-way control valve as claimed in at least one of the preceding claims,
**characterized in that** the slide position of the slide (20) can be determined by way of an electronic sensor device and is controllable by way of an electronic control device.

10. Multi-way control valve as claimed in at least one of the preceding claims,
**characterized in that** the position sensor is positively or frictionally connected to a coil member of the electromagnetic control device (6) and, exactly as the latter, is connected to the electronic control unit (ECU).

11. Multi-way control valve.as claimed in at least one of the preceding claims,
**characterized in that** the electromagnetic control device (6) comprises a proportional magnet.

12. Multi-way control valve as claimed in at least one of the preceding claims,
**characterized in that** a slot-type seal is provided between the slide (20) and the housing member (22).

13. Multi-way control valve as claimed in claim 12,
**characterized in that** the slot is provided by the radial clearance between the slide (20) and the housing member (22).

14. Multi-way control valve as claimed in claim 12 or 13,
**characterized in that** a contact seal (62) is provided in addition.

15. Multi-way control valve as claimed in claim 14,
**characterized in that** the contact seal (62) is configured as a biassed elastomeric/Teflon seal.

## Revendications

1. Valve de régulation (2) à plusieurs voies, à commande électromagnétique, pour système de freinage hydraulique à régulation du glissement pour véhicule automobile, servant à relier sur le plan écoulement au moins un frein de roue à une source haute pression ou à un accumulateur basse pression par l'intermédiaire de plusieurs raccords situés sur la valve de régulation à plusieurs voies, comprenant
- un tiroir (20) qui est guidé dans un corps de boîtier (22) en forme de manchon et qui comprend une première arête de commande (48) et constitue, avec une arête de commande (50) correspondante située sur le corps de boîtier (22), une première section transversale d'étranglement (52) variable située dans la liaison hydraulique d'agent de pression entre le raccord de la source haute pression et le raccord du frein de roue, le tiroir (20) étant soumis à une précontrainte en direction d'une première position d'extrémité dans laquelle le raccord du frein de roue est relié sur le plan écoulement au raccord de la source haute pression et est isolé sur le plan écoulement vis-à-vis du raccord de l'accumulateur basse pression,
- une valve (46) qui est prévue entre le raccord du frein de roue et le raccord de l'accumulateur basse pression et qui est fermée pendant le fonctionnement normal du frein et s'ouvre pour la suppression de pression dans le frein de roue,
**caractérisée en ce qu'**un obturateur fermant la valve (46) entre le raccord du frein de roue et le raccord de l'accumulateur basse pression est formé par le tiroir (20), **en ce que**, dans l'état de blocage de cette valve (46) réalisée sous forme d'une valve à levée, les deux faces frontales (40, 34) du tiroir (20) sont soumises à l'action d'un fluide hydraulique se trouvant sous la pression qui règne à l'endroit du raccord du frein de roue et le tiroir (20) est appliqué en appui sur un siège d'étanchéité (44), et **en ce que** le fluide hydraulique peut s'échapper par le raccord de l'accumulateur basse pression lorsque la valve à levée (46) s'ouvre.

2. Valve de régulation à plusieurs voies suivant la revendication 1, **caractérisée en ce que** le tiroir (20) comporte une seconde arête de commande (54) qui forme, avec une seconde arête de commande (56) correspondante située sur le corps de boîtier (22), une seconde section transversale d'étranglement (58) variable située dans la liaison hydraulique entre les raccords du frein de roue et de l'accumulateur basse pression.

3. Valve de régulation à plusieurs voies suivant la revendication 1 ou 2, **caractérisée en ce que** les premières (48, 50) et les secondes (54, 56) arêtes de commande sont disposées d'une manière telle que, lorsque le tiroir (20) se déplace dans le sens d'une suppression de pression à l'endroit du raccord de frein de roue, c'est d'abord la première section transversale d'écoulement (52) qui est fermée, puis alors seulement la seconde section transversale d'écoulement (58) qui est ouverte.

4. Valve de régulation à plusieurs voies suivant la revendication 2 ou 3, **caractérisée en ce que** les sections transversales d'écoulement (52, 58) délimitées par les arêtes de commande (48, 50 ; 54, 56) croissent progressivement lors d'un déplacement uniforme du tiroir.

5. Valve de régulation à plusieurs voies suivant la revendication 2, 3 ou 4, **caractérisée en ce que** la seconde arête de commande (54) du tiroir (20) est réalisée sur la face frontale (40) du tiroir (20) qui est tournée vers le siège d'étanchéité (44).

6. Valve de régulation à plusieurs voies suivant la revendication 5, **caractérisée en ce que** le tiroir (20) peut être appliqué par sa seconde arête de commande (54) en appui sur le siège d'étanchéité (44).

7. Valve de régulation à plusieurs voies suivant la revendication 6, **caractérisée en ce qu'**une fois soulevée du siège d'étanchéité (44), la seconde arête de commande (54) est encore toujours en chevauchement avec la seconde arête de commande (56) du corps de boîtier (22) et que ce n'est qu'après être passée devant cette seconde arête de commande (56) qu'elle ouvre la seconde section transversale d'étranglement (58).

8. Valve de régulation à plusieurs voies suivant au moins l'une des revendications précédentes, **caractérisée en ce que** le siège d'étanchéité (44) comprend un élément annulaire (42) en élastomères en appui sur lequel le tiroir (20) peut être appliqué d'une manière étanche par sa seconde arête de commande (54).

9. Valve de régulation à plusieurs voies suivant au moins l'une des revendications précédentes, **caractérisée en ce que** la position de coulissement du tiroir (20) peut être déterminée au moyen d'un dispositif capteur électronique et peut être réglée au moyen d'un dispositif de régulation électronique.

10. Valve de régulation à plusieurs voies suivant au moins l'une des revendications précédentes, **caractérisée en ce que** le capteur de position est relié par complémentarité de formes ou par un effet de frottement à un corps de bobine du dispositif de réglage électromagnétique (6) et est relié comme celui-ci a l'unité centrale électronique.

11. Valve de régulation à plusieurs voies suivant au moins l'une des revendications précédentes, **caractérisée en ce que** le dispositif de réglage électromagnétique (6) comprend un aimant proportionnel.

12. Valve de régulation à plusieurs voies suivant au moins l'une des revendications précédentes, **caractérisée en ce qu'**une étanchéité du type labyrinthe est réalisée entre le tiroir (20) et le corps de boîtier (22).

13. Valve de régulation à plusieurs voies suivant la revendication 12, **caractérisée en ce que** le labyrinthe est formé par le jeu radial entre le tiroir (20) et le corps de boîtier (22).

14. Valve de régulation à plusieurs voies suivant la revendication 12 ou 13, **caractérisée en ce qu'**il est en outre prévu une étanchéité par contact (62).

15. Valve de régulation à plusieurs voies suivant la revendication 14, **caractérisée en ce que** l'étanchéité par contact (62) est réalisée sous forme d'une garniture d'étanchéité en élastomère/Téflon soumise à une précontrainte.
